(19) **Europäisches Patentamt**

**European Patent Office**

**Office européen des brevets**

(11) Veröffentlichungsnummer : **0 088 308**
**B1**

(12) **EUROPÄISCHE PATENTSCHRIFT**

(45) Veröffentlichungstag der Patentschrift :
16.04.86

(21) Anmeldenummer : **83101858.5**

(22) Anmeldetag : **25.02.83**

(51) Int. Cl.⁴ : **A 22 C 13/00**

(54) Schlauchförmige Lebensmittelhülle mit Überzug auf ihrer Innenseite, Verfahren zu ihrer Herstellung und ihre Verwendung als Wursthaut.

(30) Priorität : 08.03.82 DE 3208283

(43) Veröffentlichungstag der Anmeldung :
14.09.83 Patentblatt 83/37

(45) Bekanntmachung des Hinweises auf die Patenterteilung : 16.04.86 Patentblatt 86/16

(84) Benannte Vertragsstaaten :
AT BE CH DE FR GB IT LI LU NL SE

(56) Entgegenhaltungen :
EP-A- 0 006 551
DE-A- 2 853 269
US-A- 3 898 348

(73) Patentinhaber : HOECHST AKTIENGESELLSCHAFT
Postfach 80 03 20
D-6230 Frankfurt am Main 80 (DE)

(72) Erfinder : Hammer, Klaus-Dieter, Dr.
An der Hasenquelle 25
D-6500 Mainz-Mombach (DE)
Erfinder : Kindl, Erwin Dr.
Weinfeldstrasse 17
D-6200 Wiesbaden (DE)
Erfinder : Luchterhand, Heinz, Dr.
Am Schlosspark 93
D-6200 Wiesbaden (DE)
Erfinder : Winter, Hermann
Am Schlosspark 93
D-6200 Wiesbaden (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine schlauchförmige Lebensmittelhülle von der im Oberbegriff des Anspruchs 1 genannten Art, auf ein Verfahren zu ihrer Herstellung und ihre Verwendung.

Schlauchförmige Lebensmittelhüllen auf Basis von Cellulosehydrat mit nicht vorbehandelter Innenseite eignen sich nur bedingt zur Verwendung als Wursthüllen, weil das Wurstgut bei Frischwurst so fest an der Verpackungshülle haftet, daß diese sich bei Bedarf kaum vom Füllgut entfernen läßt ; bei Rohwurst wie z. B. Dauerwurst ist die Haftung dagegen so gering, daß sich die Verpackungshülle schon während des Trockenvorgangs bei der Lagerung vom Wurstgut trennt. Infolge des Ablösens der Hülle vom Wurstgut beim Trocknen der Dauerwurst schrumpft die Hülle mit dem Füllgut nicht mit, die Verpackungshülle wird daher faltig und unansehnlich.

Es sind künstliche Wursthüllen auf Cellulosehydratbasis für Dauerwürste bekannt (US-A-3 935 320), die auf ihrer Innen- und Außenseite eine Schicht aus eiweißähnlichen chemischen Verbindungen aufweisen, um hinreichende Haftung zwischen Wurstmasse und Hülle zu bewirken. Derartige eiweißähnliche Verbindungen sind beispielsweise chemisch modifiziertes Eiweiß wie Casein oder Gelatine (US-A-4 142 013) sowie Epichlorhydrin-Polyamin-Polyamid-, Harnstoff-Formaldehyd- oder Melamin-Formaldehyd-Harze (US-A-3 378 379).

Die Reaktion dieser Substanzen mit den Hydroxylgruppen der Cellulose ist nach Verlassen der Trockenvorrichtung aber noch nicht beendet. Es besteht deshalb nach dem Flachlegen und Aufwickeln der Schlauchhülle die Gefahr, daß — insbesondere bei hohem Feuchtigkeitsgehalt der Schlauchhülle und bei hohem Druck — teilweise eine Reaktion mit den Hydroxylgruppen der angrenzenden, gegenüberliegenden Schlauchhüllenoberfläche stattfindet. Diese Reaktion macht sich dann als unerwünschtes Haften oder sogar Verkleben bemerkbar, wenn die Schlauchhülle nach einer Lagerzeit auf der Rolle weiterverarbeitet, z. B. gerafft oder gefüllt, werden soll.

Häufig besteht auch die Gefahr, daß das die Schlauchhülle bildende Cellulosehydrat bei Verwendung der genannten chemischen Verbindungen in unerwünschter und unkontrollierbarer Weise vernetzt wird, wodurch Versprödung der Schlauchhülle eintritt. Bei der bestimmungsgemäßen Verwendung der Schlauchhülle, beispielsweise beim Raffen, können dann Brüche oder Löcher in der Schlauchwand auftreten.

Ein weiterer Nachteil besteht darin, daß für jeden Darmtyp ein bestimmter, relativ enger Bereich der Auftragsmenge einzuhalten ist. Wird der Bereich überschritten, so treten Schälschwierigkeiten auf, wird er unterschritten, so löst sich die Schlauchhülle vom Füllgut ab.

Ausgehend von diesem Stand der Technik liegt der vorliegenden Erfindung nun die Aufgabe zugrunde, eine schlauchförmige Lebensmittelhülle auf Basis von Cellulosehydrat von der im Oberbegriff des Anspruchs 1 genannten Art vorzuschlagen, bei welcher der auf der Innenseite vorgesehene Überzug aus eiweißähnlichem Material nicht zu diesen unerwünschten chemischen Reaktionen mit dem die Schlauchhülle bildenden Cellulosehydrat neigt und auch eine Vernetzung von Cellulosehydratmolekülen ausschließt. Der Überzug soll das Ablösen der Hülle von dem Wurstbrät beim Trocknen der Rohwurst verhindern, aber auch zugleich einen guten Trenneffekt zwischen Wurstmasse und Schlauchhülle bewirken. Die Aufgabe besteht somit darin, der Schlauchhülle Eigenschaften zu verleihen, die an sich einander entgegengesetzt sind.

Die den Überzug bildenden chemischen Stoffe müssen darüber hinaus den lebensmittelrechtlichen Bestimmungen genügen, preiswert und ohne zusätzliche Verfahrensschritte anwendbar sein.

Die der Erfindung zugrundeliegende Aufgabe wird gelöst durch eine schlauchförmige Hülle mit den im Anspruch 1 genannten Merkmalen sowie durch die im Anspruch 7 angegebene Verwendung und das im Anspruch 8 beschriebene Verfahren. Die abhängigen Ansprüche geben weitere Ausführungsformen der Schlauchhülle bzw. des Verfahrens an.

Es ist zwar auch Stand der Technik, eine schlauchförmige Nahrungsmittelhülle auf Cellulosebasis auf ihrer Innenseite mit einem Überzug aus einem Mineralöl (GB-A-1 381 231) oder einem Gemisch von wasserlöslichem Celluloseäther (US-A-3 898 348), chemisch modifizierter Stärke, teilverseiftem Polyvinylalkohol oder mikrokristalliner Cellulose (US-A-4 248 900) und pflanzlichem Öl zu versehen. Diese Hülle ist aber für Roh- und Brühwürste nicht geeignet, sondern ist zur Verwendung bei der Herstellung von Würsten in sogenanntem « Schäldarm » vorgesehen ; bei derartigen Würsten werden die Hüllen vor dem Verkauf der Würste bzw. vor ihrer Weiterverarbeitung maschinell von der Wurstmasse entfernt. Die Ablösbarkeit dieser bekannten Verpackungshüllen von der Wurstmasse soll die störungsfreie maschinelle Ablösung der Schlauchhüllen vom Füllgut erleichtern, d. h. Abrisse durch anhaftendes Wurstbrät oder Verletzung der Hülle durch mechanische Einwirkung soll nicht auftreten. Eine solche Hülle ist deshalb als Wursthülle für Roh- und Brühwürste nicht geeignet.

Die Schlauchhülle der Erfindung zeigt überraschenderweise einerseits die für Rohwürste geforderte Eigenschaft, daß sich die Wursthaut während der Lagerung der Wurst vom Wurstbrät nicht abtrennt und ihr glattes und pralles Aussehen beibehält. Die obengenannte Verklebung und Versprödung der Schlauchhülle während der Lagerung im aufgewickelten, flachgelegten Zustand wird nahezu völlig ausgeschaltet. Unerwartet wird bei der Erfindung die Verknüpfung der chemischen Kondensationsprodukte mit der gewünschten Oberfläche, d. h. die Oberfläche, welche direkt mit dem Kondensationsprodukt beschichtet wurde, nicht beeinträchtigt, sondern sogar verbessert, so daß gleichzeitig der Effekt dieser Produkte verbessert wird.

Andererseits läßt sich die Wursthülle vor dem Verzehr aber auch leicht vom Wurstgut abschälen, lästiges Abreißen beim Abziehen vom Füllgut tritt dabei nicht auf. Die erfindungsgemäß angestrebte Wirkung ist auf die erfindungsgemäße Stoffkombination zurückzuführen, wobei die einzelnen Komponenten sich überraschenderweise in ihrer Wirkung nicht aufheben. An sich wäre zu erwarten, daß die zugesetzte Öl-Komponente die Wirkung der Kondensationsprodukte aufheben würde.

Die Herstellung von insbesondere faserverstärkten Schlauchhüllen auf Basis von Cellulosehydrat ist bekannt und nicht Gegenstand der vorliegenden Erfindung. Die Schlauchhülle zeigt einen üblichen Wassergehalt von z. B. 5 bis 15 Gew.-% oder besitzt einen sehr hohen Wassergehalt von mehr als 25 Gew.-%, so daß sie vor dem Füllen nicht gewässert werden muß. Sie wird gewöhnlich durch Koagulation von Viskose und Regenierung der Cellulose hergestellt und enthält Weichmacher wie Glycerin. Die Faserverstärkung ist vorzugsweise eine Papiereinlage.

Verfahren zur Innenbeschichtung von Cellulosehydratschläuchen sind ebenfalls beschrieben, beispielsweise in GB-A-1 201 830 sowie US-A-2 901 358 und US-A-3 378 379, und als solche nicht Gegenstand der vorliegenden Erfindung.

Der Überzug auf der Schlauchinnenseite besteht aus einem Gemenge chemischer Stoffe auf Basis von Triglyceridgemischen von pflanzlichen Fettsäuren mit einer Kohlenstoffkettenlänge im Bereich von 4 bis 14 Kohlenstoffatomen, Siliconöl und/oder natürlichen Ölen als erster Komponente und einer zweiten Komponente, umfassend wasserunlösliche kationische Harze, vorzugsweise Kondensationsprodukte aus Eiweiß, beispielsweise Casein, mit Formaldehyd, z. B. mit einem Formaldehyd-Anteil von 5 bis 20 Gew.-%, bevorzugt 6 bis 8 Gew.-%, bezogen auf das Eiweißgewicht, Kondensationsprodukte aus Harnstoff und Formaldehyd (US-A-2 616 874), Kondensationsprodukte aus Melamin und Formaldehyd (US-A-2 796 362 und US-A-2 345 543), und vorzugsweise Kondensationsprodukte aus Epichlorhydrin mit Polyamin, Polyamid oder Polyaminpolyamid (US-A-2 573 956, US-A-2 926 154 und US-A-3 378 379). Für die Umsetzung mit Epichlorhydrin kommen als Polyamine einfache Alkylendiamine in Betracht oder Polyalkylenpolyamine wie z. B. Diäthylentriamin, Triäthylentetramin, Tetraäthylenpentamin und die entsprechenden Polypropylen- und Polybutylen-polyamine.

Die Polyamidpolyamine sind Kondensationsprodukte einer gesättigten, aliphatischen, zweibasischen Säure, die 3 bis 8 Kohlenstoffatome im Molekül aufweist, mit einem der obengenannten Polyamine, welches mindestens eine sekundäre und zwei primäre Aminogruppen aufweist.

Bei Celluloseschläuchen ohne Faserverstärkung wird eine relativ niedrige Konzentration der noch nicht ausgehärteten Kondensationsprodukte in wäßriger Lösung zur Imprägnierung der Schlauchinnenseite verwendet. Sie liegt gewöhnlich bei 0,3 bis 2,5 Gew.-%, vorzugsweise 0,5 bis 1,2 Gew.-%, bezogen auf die Gesamtlösung, die auch die Öl-Komponente emulgiert enthält. Die Konzentration der Öl-Komponente ist dagegen höher und liegt gewöhnlich bei 3 bis 30 Gew.-%, vorzugsweise bei 5 bis 20 Gew.-%, bezogen auf die Gesamtlösung.

Bei Cellulosehydratschläuchen mit Faserpapiereinlage machen die Dickenschwankungen des Materials und die Rauhigkeit der inneren Oberfläche eine höhere Konzentration an Kondensationsprodukt, nämlich 0,8 bis 5 Gew.-%, vorzugsweise 1,2 bis 3 Gew.-%, und eine geringere Ölkonzentration, nämlich 0,5 bis 15 Gew.-%, vorzugsweise 2 bis 6 Gew.-%, notwendig. Der gewünschte Effekt wird nur mit einer beständigen Ausrüstungsflotte erzielt. Es hat sich als zweckmäßig erwiesen, das Öl in eine beständige Emulsion zu überführen und diese unter starkem Rühren gleichmäßig in der wäßrigen Lösung zu verteilen.

Der Überzug auf der Schlauchinnenseite umfaßt insgesamt 40 bis 120, vorzugsweise 50 bis 80 mg an wasserunlöslichem Kondensationsprodukt bezogen auf $m^2$ Trägeroberfläche. Diese Werte wurden auf folgende Weise bestimmt :

Von 500 $cm^2$ der inneren Oberfläche werden 200 mg Oberflächenmaterial abgeschabt und der Stickstoffgehalt des abgeschabten Materials z. B. verbrennungsanalytisch bestimmt. Zum Vergleich wird die Schlauchinnenseite aus dem gleichen Trägermaterial, allerdings ohne Beschichtung, auf ihren Stickstoffgehalt untersucht. Hierzu wird in analoger Weise von jeweils 500 $cm^2$ innerer Oberfläche 200 mg Oberflächenmaterial abgeschabt und der Stickstoffgehalt in gleicher Weise bestimmt. Bildet man die Differenz der Stickstoffwerte für den beschichteten und den unbeschichteten Schlauch, so erhält man den Stickstoffwert für die Innenbeschichtung und aus diesem Wert den Gehalt an Beschichtungsmaterial auf der Innenseite des Schlauchs.

Der Überzug auf der Schlauchinnenseite umfaßt ferner 25 bis 2 000 mg der Öl-Komponente, bezogen auf $m^2$ Trägeroberfläche. Bei Schläuchen mit Faserverstärkung wird vorzugsweise eine Menge an Öl-Komponente aufgebracht, die einem Flächengewicht von 100 bis 400 $mg/m^2$ entspricht. Bei nichtfaserverstärkten Schläuchen wird bei großkalibrigen Typen (Durchmesser größer/gleich etwa 50 mm) eine Menge entsprechend 50 bis 200 $mg/m^2$ und bei kleinkalibrigen Typen (Durchmesser kleiner/gleich etwa 48, gewöhnlich etwa 32 bis 42 mm) und Kranzdarm eine Menge entsprechend 300 bis 1 200 $mg/m^2$ an Ölkomponente bevorzugt. Das Flächengewicht wird durch Extraktion der Innenbeschichtung mit Methylenchlorid und gravimetrischer Bestimmung des Rückstandes nach Entfernen des Lösungsmittels ermittelt.

Bei höheren als den angegebenen Konzentrationen der den Überzug bildenden chemischen Stoffe in der zur Innenbeschichtung des Schlauchs vorgesehenen wäßrigen Lösung tritt keine Effektsteigerung ein.

Insbesondere bevorzugte natürliche Öle sind Leinöl, Olivenöl, Sonnenblumenöl, Rüböl, Palmöl und Kokosöl. Das bevorzugte Triglyceridgemisch pflanzlicher Fettsäuren enthält vorzugsweise gesättigte Fettsäuren, insbesondere mit einer Kettenlänge von 4 bis 12, vorzugsweise 6 bis 10 Kohlenstoffatomen. Diese Triglyceridgemische sind beispielsweise unter der Bezeichnung ®Miglyol oder ®Softenol im Handel. Der Ölanteil des Überzugs kann auch aus einer Abmischung genannter bevorzugter natürlicher Öle bestehen. Als geeignetes Siliconöl kommt insbesondere ein lebensmittelrechtlich zugelassenes Dimethylpolysiloxan in Betracht.

Der Überzug enthält — bedingt durch das Herstellungsverfahren — chemischen Emulgator in solchen Mengen, daß die angestrebten Eigenschaften des Überzugs bzw. der Schlauchhülle mit Überzug auf der Innenseite nicht beeinflußt werden. Derartige Emulgatoren sind beispielsweise Äthoxylate oder Propoxylate natürlicher Fettsäuren, wie sie beispielsweise durch Verseifung der natürlichen Öle, Sojaöl, Leinöl, Rhizinusöl u. ä., erhalten werden, sowie Mono- oder Diester natürlicher Fettsäuren mit mehrwertigen Alkoholen, wie beispielsweise Glycerin, Pentaerithryt, Sorbit, Mannit, u. ä., aber auch toxikologisch unbedenkliche, lebensmittelrechtlich zugelassene synthetische Emulgatoren, wie Alkyl-, Alkyl-aryl-sulfate oder -sulfonate. Äthoxylierte Sojafettsäuren sind beispielsweise unter der Bezeichnung ®Deglycal, äthoxylierte Rizinusölsäuren unter der Bezeichnung ®Cremophor im Handel. Die Emulgatoren werden in einer Menge von 3 bis 20 Gew.-%, insbesondere 5 bis 12 Gew.-%, bezogen auf die Öl-Komponente, zugesetzt.

Als bevorzugte Emulgatoren haben sich insbesondere die in den Beispielen genannten Sorbitanfettsäureester sowie äthoxylierte Soja-Fettsäuren (52,5 % Linolsäure, 33,5 % Ölsäure, Palmitinsäure, Linolensäure und Arachinsäure + 12 Mol Äthylenoxid), äthoxylierte Rhizinusölsäure (86 % Rhizinusölsäure, 9 % Ölsäure, 2 bis 3 % Linolsäure, 2 % Stearinsäure + 36 Mol Äthylenoxid) sowie äthoxylierte Ölsäuren erwiesen.

Nachfolgend wird die Herstellung einer erfindungsgemäßen Hülle beispielhaft beschrieben.

Ausgangsmaterial ist eine Schlauchhülle aus Cellulosehydrat, die nach bekannten Verfahren herstellbar ist.

Eine bestimmte Länge, beispielsweise 350 m, eines derartigen Schlauchs wird, beispielsweise nach einem der vorerwähnten bekannten Verfahren, fortlaufend auf der Innenseite mit wäßriger Flüssigkeit beschichtet. Der Schlauch wird dann getrocknet und danach gegebenenfalls mit Wasser befeuchtet, so daß er einen Wassergehalt z. B. im Bereich von 8 bis 10 Gew.-% Wasser, bezogen auf das Gesamtgewicht des Schlauchs, aufweist.

Die zur Beschichtung der Innenseite des Cellulosehydratschlauchs verwendete wäßrige Flüssigkeit wird beispielsweise wie folgt hergestellt :

In 1 l Wasser werden insgesamt etwa 3 bis 25 g hitzehärtbares Vorkondensat, beispielsweise Epichlorhydrin-Polyaminpolyamid-Vorkondensat unter Rühren gelöst. Der Lösung werden insgesamt 2 bis 20 g chemischer Emulgator, beispielsweise Sojafettsäure und 12 Mol Äthylenoxid, zugefügt. In die Lösung werden unter starkem Rühren insgesamt im Bereich von etwa 30 bis 300 g Triglyceride von pflanzlichen Fettsäuren gut emulgiert.

Gewöhnlich wird die Imprägnierlösung in dem Celluloseschlauch während seiner Herstellung vor dem Trocknen aufgebracht, wobei der Cellulosehydratgel-Schlauch mit ausreichender Menge an Beschichtungsflüssigkeit vor dem Trocknereingang gefüllt wird. Mit Quetschwalzen wird überschüssige Beschichtungsflüssigkeit zurückgehalten.

Der Schlauch aus Cellulosehydratgel passiert dann den Trockner im aufgeblasenen Zustand, wobei das Vorkondensat bei einer Trocknertemperatur von beispielsweise 90 bis 120 °C ausgehärtet und an der Cellulosehydratoberfläche fixiert wird und die Öl-Komponente auf dem Kondensationsprodukt abgeschieden wird.

Von besonderem Vorteil zeigt die schlauchförmige Lebensmittelhülle ein relativ kleines Kaliber oder Kranzform und findet dann Verwendung als Wursthülle, insbesondere in geraffter Form oder als Abschnitt, vorzugsweise für Rohwurst und Brühwurst. Unter Rohwurst sind zu verstehen die streichfähigen Sorten wie Teewurst und Mettwurst und die schnittfesten Sorten wie Cervelatwurst, Schlackwurst, Plockwurst und Salami, die auch als Dauerwürste bezeichnet werden. Unter Brühwurst sind beispielsweise zu verstehen Jagdwurst, Bierschinken, Fleischwurst, Mortadella, Lyoner, Herzwurst, Gelbwurst oder Geflügelwurst.

Die Lebensmittelhülle zeigt beim Räuchern ausgezeichnete Rauchannahme und eine schöne Rauchfarbe.

Die Erfindung wird anhand der folgenden Beispiele erläutert :

Beispiel 1

Ein Faserpapierstreifen wird durch Überlappen seiner Randzonen zu einem Schlauch mit einem Kaliber von 60 mm geformt und im Bereich der Überlappung verklebt. Seine Außenseite wird mit Viskose beschichtet. Die Viskoselösung ist bekanntlich eine alkalische Lösung von Natrium-Cellulosexanthogenat. Der Schlauch wird dann durch saure Fällbäder und Regenerierbäder gezogen, welche beispielsweise Schwefelsäure, Natriumsulfat und Ammoniumsulfat enthalten. Der erhaltene Schlauch aus Cellulosehydratgel wird vor dem Trocknen zur Innenbeschichtung mit 6 bis 8 l einer wäßrigen Emulsion gefüllt, vor dem Trocknereingang mit einem Quetschwalzenpaar flachgelegt, wobei überschüssige Emulsion zurückgehalten wird. Der Schlauch wird dann nach Aufblasen mit Stützluft bis zu einem Feuchtigkeitsgehalt von 6 bis 8 Gew.-% getrocknet und durch Besprühen mit Wasser auf einen Feuchtigkeitsgehalt von 16 bis 18 Gew.-% angefeuchtet.

Die wäßrige Emulsion hat folgende Zusammensetzung (Mengenangaben bezogen auf 10 Liter Emulsion) :

300 g Casein (®Rovita FN4, Herst. Rovita)
125 ml wäßrige Formaldehyd-Lösung (30 %ig)
300 ml Glycerin
300 ml Triglycerid auf Basis von gesättigten $C_5$- bis $C_{10}$-Fettsäuren (®Softenol-Spezialöl, Herst. Dynamit Nobel) mit
30 g Sorbitan-monooleat-äthoxylat (®Tween 80, Herst. Atlas Chemie)

Sie wird in der Weise hergestellt, daß man zunächst das Triglycerid-Gemisch in 600 ml Wasser unter Zusatz des Emulgators emulgiert und die erhaltene Emulsion in die restliche wäßrige Lösung (ca. 6 bis 8 l) unter Rühren einbringt.

Die Innenbeschichtung zeigt ein Flächengewicht von 65 mg/m$^2$ an Harz und 200 mg/m$^2$ an Öl-Komponente.

## Beispiel 2

Ein auf seiner Außen- und Innenseite mit Viskose beschichteter Schlauch aus Faserpapier mit einem Kaliber von 60 mm wird analog wie in Beispiel 1 auf seiner Innenseite imprägniert. Die wäßrige Emulsion hat folgende Zusammensetzung (bezogen auf 10 l) :

20,25 g Casein (®Rovita FN4, Herst. Rovita)
2,7  ml Formaldehyd-Lösung (30 %ig)
0,4 l Epichlorhydrin-Polyaminpolyamid-Harz (Reaktionsprodukt aus Äthylendiamin, Adipinsäure, Diäthylentriamin und Epichlorhydrin, 20 %ige-Lösung, ®Resamin HW 601, Herst. Cassella)
0,3 l Glycerin
3  l Triglycerid-Emulsion (10 %ig, ®Softenol) mit
30  g Sorbitan-monooleat-äthoxylat (®Tween 80)

Die Innenbeschichtung zeigt ein Flächengewicht von 54 mg/m$^2$ an Harz und 160 mg/m$^2$ an Öl-Komponente.

## Beispiel 3

Analog zu Beispiel 1 wird ein faserverstärkter Schlauch aus Cellulosehydrat mit einer Innenbeschichtung versehen. Die Emulsion hat folgende Zusammensetzung (bezogen auf 10 l) :

1  l Epichlorhydrin-Polyaminopolyamid-Harz (10 %ige-Lösung, ®Resamin VHW 61/l, Herst. Cassella)
0,3 l Glycerin
3  l Triglycerid-Emulsion (10 %ig, ®Miglyol 812, Herst. Dynamit Nobel) mit
30  g Sorbitan-monooleat-äthoxylat (®Tween 80, Herst. Atlas Chemie) und Sorbitan-monolaurat-äthoxylat (®Span 20, Herst. Atlas Chemie), Gew.-Verhältnis 1 : 1.

Die Auftragsmenge der Innenbeschichtung beträgt 58 mg/m$^2$ an Harz und 175 mg/m$^2$ an Öl-Komponente.

## Beispiel 4

Eine Viskoselösung wird durch eine ringförmige Düse in ein schwefelsäurehaltiges Koagulationsbad ausgepreßt, der erhaltene koagulierte Schlauch aus Viskosegel mit einem Kaliber von 40 mm wird in saurem Medium zu Cellulosehydratgel regeneriert. Der Schlauch aus Cellulosehydratgel wird vor dem Trocknen zur Innenbeschichtung mit 2 l einer wäßrigen Emulsion gefüllt und, wie in Beispiel 1 beschrieben, auf der Innenseite imprägniert. Die Emulsion zeigt folgende Zusammensetzung (bezogen auf 10 l) :

17,5 g Casein (®Rovita FN4, Herst. Rovita)
23,5 ml Formaldehyd-Lösung (30 %ig)
1  l Epichlorhydrin-Polyaminpolyamid (10 %ige-Lösung, ®Resamin VHW 61/l, Herst. Cassella)
0,3 l Glycerin

3 l Triglycerid-Emulsion (10 %ig, ®Softenol, Herst. Dynamit Nobel) mit
150 g Sorbitan-monooleat-äthoxylat (®Tween 80, Herst. Atlas Chemie)

Die Auftragsmenge der Innenbeschichtung beträgt 51 mg/m² an Harz und 155 mg/m² an Öl-Komponente.

Die in den Beispielen hergestellten Schläuche werden in Abschnitten oder Raupenform mit einem Wurstbrät zur Herstellung von Salami gefüllt. Während der Lagerung der Würste schrumpft die Wursthülle mit der Wurstmasse und haftet gut am Füllgut. Nach beliebiger Lagerzeit läßt sich die Wursthülle leicht abschälen.

Die Erfindung führt zu einer wesentlichen Verbesserung der Verarbeitungs- und Gebrauchseigenschaften von schlauchförmigen Lebensmittelhüllen auf Basis von Cellulosehydrat. Eine Haftung oder Verklebung des flachgelegten, aufgerollten Schlauches während seiner Lagerung, unabhängig vom Feuchtigkeitsgehalt des Schlauches, wird auf Dauer verhindert. Die Trocknung kann unter schonenden Bedingungen durchgeführt werden, so daß Beschädigungen der Innenimprägnierung vermieden werden. Die Schälbarkeit der Schlauchhülle wird verbessert, ohne daß ihre Haftung am Füllgut während der Lagerung beeinträchtigt wird. Verarbeitungsschwierigkeiten treten nicht mehr auf, wenn der Schlauch in Abschnitten gefüllt wird ; die Abschnitte lassen sich problemlos öffnen. Soll der Schlauch in die Form einer Raupe übergeführt werden, so treten Brüche oder Löcher in der Beschichtung beim Raffvorgang durch den Angriff der Rafforgane nicht auf. Das Raffen wird erleichtert, wobei übliche Raffvorrichtungen verwendet werden können.

**Patentansprüche**

1. Schlauchförmige Lebensmittelhülle, insbesondere künstliche Wursthaut für Würste vom Rohwurst- oder Brühwursttyp, bestehend aus einem Trägerschlauch auf Basis von Cellulosehydrat, der gegebenenfalls faserverstärkt ist und in seiner Wandung Wasser sowie 15 bis 30 Gew.-% Weichmacher (bezogen auf das Gesamtgewicht des Trägerschlauchs) enthält, und einer festhaftenden Überzugsschicht auf der inneren Oberfläche des Trägerschlauchs aus einem wasserunlöslichem gehärtetem kationischem Harz, insbesondere auf Basis von Eiweiß-Formaldehyd, Harnstoff-Formaldehyd oder Melamin-Formaldehyd oder einem Kondensationsprodukt von aliphatischem Polyamin oder Polyamid oder von Polyaminpolyamid mit bifunktionellen Halohydrinen oder deren Derivaten wie Epichlorhydrin oder Gemischen aus diesen Harzen, dadurch gekennzeichnet, daß die Überzugsschicht aus einem Gemisch besteht, welches eines oder mehrere der besagten Harze und zusätzlich ein natürliches Öl, ein synthetisches Triglyceridgemisch mit pflanzlichen Fettsäuren einer Kohlenstoffkettenlänge im Bereich von 4 bis 14 Kohlenstoffatomen und/oder ein Siliconöl, sowie gegebenenfalls einen oder mehrere Emulgatoren für das Öl enthält.

2. Lebensmittelhülle nach Anspruch 1, dadurch gekennzeichnet, daß die Überzugsschicht als natürliches Öl Olivenöl, Leinöl, Sonnenblumenöl, Rüböl, Palmöl, Kokosöl oder Mischungen dieser Öle umfaßt.

3. Lebensmittelhülle nach Anspruch 1 oder 2, dadurch gekennzeichnet, daß die Überzugsschicht ein Triglyceridgemisch auf Basis von gesättigten Fettsäuren, insbesondere mit einer Kettenlänge von 6 bis 10 Kohlenstoffatomen, umfaßt.

4. Lebensmittelhülle nach einem der Ansprüche 1 bis 3, dadurch gekennzeichnet, daß die Überzugsschicht auf der inneren Oberfläche des Trägerschlauchs einen Harzgehalt mit einem Flächengewicht von 40 bis 120 mg/m², insbesondere 50 bis 80 mg/m² und einen Gehalt an Öl-Komponente entsprechend einem Flächengewicht von 25 bis 2 000 mg/m² besitzt.

5. Lebensmittelhülle nach einem der Ansprüche 1 bis 4, dadurch gekennzeichnet, daß sie die Form eines einseitig verschlossenen, insbesondere mit einem Clip und/oder einer Abbindung versehenen Abschnitts aufweist, dessen Länge im wesentlichen der Länge der herzustellenden Wurst entspricht.

6. Lebensmittelhülle nach einem der Ansprüche 1 bis 4, dadurch gekennzeichnet, daß sie gerafft ist.

7. Verwendung der Lebensmittelhülle nach einem der vorhergehenden Ansprüche als künstliche Wursthülle für Rohwurst oder Brühwurst.

8. Verfahren zur Herstellung der Lebensmittelhülle nach einem der Ansprüche 1 bis 4, bei dem man die Innenseite des Trägerschlauches aus Cellulosehydratgel, hergestellt durch Koagulation von Viskose, mit wasserlösliches Vorkondensat enthaltender Flüssigkeit behandelt, den Schlauch einer Wärmeeinwirkung unter Trocknen und Ausbildung eines Überzugs aus wasserunlöslichem Kondensationsprodukt unterwirft und gegebenenfalls durch Befeuchten mit Wasser einen bestimmten Wassergehalt des Trägerschlauchs einstellt, dardurch gekennzeichnet, daß die Beschichtungsflüssigkeit 0,3 bis 2,5 Gew.-% des wasserlöslichen Vorkondensates und 3 bis 30 Gew.-% der emulgierten Öl-Komponente enthält.

9. Verfahren zur Herstellung der Lebensmittelhülle nach einem der Ansprüche 1 bis 4, bei dem man die Innenseite des faserverstärkten Trägerschlauches aus Cellulosehydratgel, hergestellt durch Koagulation von Viskose, mit wasserlösliches Vorkondensat enthaltender Flüssigkeit behandelt, den Schlauch einer Wärmeeinwirkung unter Trocknen und Ausbildung eines Überzugs aus wasserunlöslichem Kondensationsprodukt unterwirft und gegebenenfalls durch Befeuchten mit Wasser einen bestimmten Wassergehalt des Trägerschlauchs einstellt, dadurch gekennzeichnet, daß die zur Überzugsschicht der Zusammensetzung nach Anspruch 1 führende Emulsion 0,8 bis 5 Gew.-% des wasserlöslichen Vorkondensates und 0,5 bis 15 Gew.-% der emulgierten Öl-Komponente enthält.

10. Verfahren nach Anspruch 8 oder 9, dadurch gekennzeichnet, daß man den mit der Beschichtungsflüssigkeit gefüllten Schlauch aus Cellulosehydratgel längsaxial und im wesentlichen vertikal führt, oberhalb des Spiegels der Beschichtungsflüssigkeit abquetscht, wobei überschüssige Beschichtungsflüssigkeit zurückgehalten wird, und den Schlauch mit Beschichtungsflüssigkeit auf seiner Innenseite im aufgeblasenen Zustand trocknet.

**Claims**

1. Tubular food casing, in particular an artificial sausage casing for sausages of the uncooked or cooked type, comprising a support tube based on cellulose hydrate, which is optionally fiber-reinforced and contains in its wall water and from 15 to 30 % by weight (relative to the total weight of the support tube) of a plasticizer, and further comprising a firmly adhering coating layer on the inside surface of the support tube, said coating being composed of a water-insoluble, cured cationic resin, especially a resin on a basis of protein/formaldehyde, urea/formaldehyde or melamine/formaldehyde or of a condensation product of an aliphatic polyamine or polyamide or of a polyamine-polyamide with bifunctional halohydrins or the derivatives thereof, such as epichlorohydrin, or mixtures of these resins, characterized in that the coating layer is composed of a mixture which contains one or several of the said resins and, additionally, a natural oil, a synthetic triglyceride mixture with vegetable fatty acids having from 4 to 14 carbon atoms in their carbon chain, and/or a silicone oil and, optionally, one or several emulsifiers for said oil.

2. A food casing as claimed in claim 1, wherein the coating layer comprises, as the natural oil, olive oil, linseed oil, sunflower oil, rape oil, palm oil, coconut oil or.mixtures thereof.

3. A food casing as claimed in claim 1 or claim 2, wherein the coating layer comprises a triglyceride mixture on a basis of saturated fatty acids, particularly of a kind having from 6 to 10 carbon atoms in their carbon chain.

4. A food casing as claimed in any of claims 1 to 3, wherein the coating layer on the inside surface of the support tube has a resin content corresponding to a weight per unit area from 40 to 120 $mg/m^2$, particularly from 50 to 80 $mg/m^2$, and a content of the oil component corresponding to a weight per unit area from 25 to 2 000 $mg/m^2$.

5. A food casing as claimed in any of claims 1 to 4, which is in the form of a section closed at one end, particularly a section which is provided with a clip and/or a tie and the length of which substantially corresponds to the length of the sausage to be produced.

6. A food casing as claimed in any of claims 1 to 4, which is in the form of a shirred stick.

7. Use of the food casing as claimed in any of the preceding claims, as an artificial sausage casing for uncooked or cooked sausages.

8. A process for the manufacture of the food casing as claimed in any of claims 1 to 4, comprising the steps of treating the inside surface of the support tube of cellulose hydrate gel prepared by coagulating viscose, with a liquid which contains a water-solube precondensate, subjecting the tube to the action of heat so that it is dried and a coating of water-insoluble condensation product is formed and optionally adjusting the support tube to a specific water content by moistening in with water, wherein the coating liquid contains from 0.3 to 2.5 % by weight of the water-soluble precondensate and from 3 to 30 % by weight of the emulsified oil component.

9. A process for the manufacture of the food casing as claimed in any of claims 1 to 4, comprising the steps of treating the inside surface of the fiber-reinforced support tube of cellulose hydrate gel prepared by coagulating viscose, with a liquid which contains a water-soluble precondensate, subjecting the tube to the action of heat so that it is dried and a coating of water-insoluble condensation product is formed and optionally adjusting the support tube to a specific water content by moistening it with water; wherein the emulsion, from which the coating layer composed as claimed in Claim 1 is produced, contains from 0.8 to 5 % by weight of the water-soluble precondensate and from 0.5 to 15 % by weight of the emulsified oil component.

10. A process as claimed in claim 8 or claim 9, wherein the tube of cellulose hydrate gel, which is filled with the coating liquid is moved in the direction of its longitudinal axis and substantially vertically and is squeezed above the level of the coating liquid to hold back any excess coating liquid and the tube covered with coating liquid on its inside surface is dried in the inflated state.

**Revendications**

1. Gaine tubulaire pour aliments, en particulier peau de saucisse artificielle pour saucisses du type saucisse crue ou saucisse cuite, constituée d'une gaine de support à base d'hydrate de cellulose, qui est, le cas échéant, renforcée de fibres, et contient dans sa paroi de l'eau, ainsi que 15 à 30 % en poids de plastifiant (par rapport au poids total de la gaine de support), et d'une couche de revêtement, adhérant solidement sur la face interne de la gaine de support, d'une résine cationique durcie insoluble dans l'eau, en particulier à base de protéine-formaldéhyde, d'urée formaldéhyde ou de mélamine-formaldéhyde ou d'un produit de condensation d'une polyamine ou d'un polyamide aliphatique ou d'un polyamine polyamide avec des halohydrines bifonctionnelles ou leurs dérivés, telles que l'épichlorhydrine ou de mélanges de ces résines, caractérisée en ce que la couche de revêtement se compose d'un mélange qui contient une ou plusieurs des résines ci-dessus et, en outre, une huile naturelle, un mélange synthétique de triglycérides avec des acides gras végétaux ayant une longueur de chaîne carbonée dans l'intervalle de 4 à 14 atomes de carbone et/ou une huile de silicone, ainsi que, le cas échéant, un ou plusieurs émulsionnants pour l'huile.

2. Enveloppe pour aliments suivant la revendication 1, caractérisée en ce que la couche de revêtement comprend comme huile naturelle de l'huile d'olive, de l'huile de lin, de l'huile de tournesol, de l'huile de colza, de l'huile de palme, de l'huile de coprah ou des mélanges de ces huiles.

3. Enveloppe pour aliments suivant les revendications 1 ou 2, caractérisée en ce que la couche de revêtement comprend un mélange de triglycérides à base d'acides gras saturés, ayant en particulier une longueur de chaîne de 6 à 10 atomes de carbone.

4. Enveloppe pour aliments suivant l'une des revendications 1 à 3, caractérisée en ce que la couche de revêtement sur la face interne de la gaine de support possède une teneur en résine correspondant à un poids par unité de surface de 40 à 120 mg/m², en particulier de 50 à 80 mg/m², et une teneur en constituant huileux correspondant à un poids par unité de surface de 25 à 2 000 mg/m².

5. Enveloppe pour aliments suivant l'une des revendications 1 à 4, caractérisée en ce qu'elle présente la forme d'un tronçon fermé d'un côté, en particulier muni d'un clip et/ou d'un lien, dont la longueur correspond pratiquement à la longueur de la saucisse à fabriquer.

6. Enveloppe pour aliments suivant l'une des revendications 1 à 4, caractérisée en ce qu'elle est froncée.

7. Utilisation de l'enveloppe pour aliments suivant l'une des revendications précédentes comme peau de saucisse artificielle pour les saucisses crues ou cuites.

8. Procédé de fabrication de l'enveloppe pour aliments, suivant l'une des revendications 1 à 4, dans lequel on traite la face interne de la gaine de support en gel d'hydrate de cellulose, fabriquée par coagulation de viscose, par un liquide contenant un précondensat soluble dans l'eau, on soumet la gaine à l'action de la chaleur avec séchage et formation d'un revêtement de produit de condensation insoluble dans l'eau, et, le cas échéant, on ajuste par humidification avec de l'eau une teneur en eau déterminée de la gaine de support, caractérisé en ce que le liquide d'enduction contient 0,3 à 2,5 % en poids du précondensat soluble dans l'eau et 3 à 30 % en poids du constituant huileux émulsionné.

9. Procédé de fabrication de l'enveloppe pour aliments, suivant l'une des revendications 1 à 4, dans lequel on traite la face interne de la gaine de support en gel d'hydrate de cellulose renforcée de fibres, fabriquée par coagulation de viscose, par un liquide contenant un précondensat soluble dans l'eau, on soumet la gaine à l'action de la chaleur avec séchage et formation d'un revêtement de produit de condensation insoluble dans l'eau, et, le cas échéant, on ajuste une teneur en eau déterminée de la gaine de support par humidification avec de l'eau, caractérisé en ce que l'émulsion conduisant à la couche de revêtement ayant la composition suivant la revendication 1 contient 0,8 à 5 % en poids du précondensat soluble dans l'eau et 0,5 à 15 % en poids du constituant huileux émulsionné.

10. Procédé suivant les revendications 8 ou 9, caractérisé en ce qu'on fait avancer la gaine de gel d'hydrate de cellulose remplie de liquide d'enduction dans le sens de son axe longitudinal et pratiquement verticalement, en ce qu'on l'essore au-dessus du niveau du liquide de revêtement, ce qui retient le liquide d'enduction en excès, et en ce qu'on sèche la gaine avec du liquide d'enduction sur sa face interne à l'état gonflé.